# EUROPEAN PATENT SPECIFICATION

(11) **EP 3 106 680 B1**
(45) Date of publication and mention of the grant of the patent: **20.12.2017**
(21) Application number: 16173111.2
(22) Date of filing: 06.06.2016
(51) Int. Cl.: F16B 5/10, F16B 21/04, F16B 7/04

(54) **TIGHTENING DEVICE FOR METAL SECTIONS**
SPANNVORRICHTUNG FÜR METALLPROFILE
DISPOSITIF DE SERRAGE POUR PROFILÉS MÉTALLIQUES

(30) Priority: 15.06.2015 IT UB20151389
(43) Date of publication of application: 21.12.2016
(73) Proprietor: L.M. DEI F.LLI MONTICELLI - S.R.L., 60027 Osimo (AN) (IT)
(72) Inventor: MONTICELLI, VLADIMIRO, 60024 FILOTTRANO (AN) (IT)
(74) Representative: Baldi, Claudio

(56) References cited:
- US-A1- 2015 104 247
- US-B1- 6 926 459

## Description

The present patent application for industrial invention relates to a tightening device for metal sections that is intended to fasten a metal section to a wall or to connect consecutive sections, preferably disposed at square angle. In particular, the present invention relates to a tightening device according to the preamble of claim 1. Such a tightening device is known from US 2015/104247 A1. The present invention has been developed from the critical observation of the currently available squares that are used to connect two consecutive sections at 90°.

The tightening device of the invention can be advantageously used to connect consecutive sections, and it is can be alternatively used to fix and tighten a section to any type of element, such as a wall or the like.

The squares that are currently available on the market comprise two plates that are connected at square angle, each of them being intended to be inserted in the end of a section that is cut at 45°. In order to make such a connection, each section has a hole inside which a peg provided in one of the two plates of the square is intended to be inserted.

In particular, two different types of squares are known, which differ in the structure of the pegs intended to be inserted in said holes provided on the sections.

The squares can be provided with fixed pegs obtained in one piece with a portion of the square from which they protrude, or mobile pegs housed inside a housing provided in the square.

The squares with fixed pegs are impaired by the difficulties encounter when fastening the square between two sections disposed at square angle. Such a fastening operation generates inconveniences and delays, especially in case of operators with no experience.

In the case of squares with mobile pegs, the plates of the square are provided with housings that receive pegs protruding from the surface of the plate, being subject to the expulsion force of an elastic member inserted in the housing.

The plates with mobile pegs are dimensioned in such way to be inserted in the end of each section only when the peg is retracted; in other words, said mobile pegs substantially consist in buttons that must be pressed in order to insert the plate in the section. The sliding of the plate inside the section ends when the peg is inserted in the hole, a circumstance that occurs as soon as the peg and the hole are aligned.

Nevertheless, the squares with mobile pegs require a longer construction time compared to the squares with fixed pegs, due to the correct mounting of the elements that form the mobile buttons; likewise, said squares are more expensive than the squares with fixed pegs.

Both types of squares, either with fixed or mobile pegs, comprise a register screw that connects the two plates of the angle and allows bringing them either closer or farther.

In order to use said screw, the sections are provided with an additional hole where an Allen wrench is inserted to actuate the register screw, the function of which is to bring closer or farther the two sections joined to the plates of the square by means of the fixed or mobile pegs.

In other words, said square does not allow for moving an individual section with respect to the plate of the square housed inside it.

The purpose of the present invention is to overcome the aforementioned drawbacks of the prior art, by devising a tightening device for metal sections that is practical, inexpensive, reliable and capable of guaranteeing a stable tightening of the metal sections.

The tightening device of the invention comprises:
- a plate comprising a seat defined at least by one sidewall; said plate comprising two opposite projections that protrude from said at least one sidewall of said seat;
- a tightening pin comprising a stem revolvingly inserted in said seat of the plate; said tightening pin comprising two opposite specular sets of adjacent side-by-side niches, wherein the niches of a same set have a different depth and wherein each projection of the seat of said plate is disposed inside one of the niches of one of said two sets.

For the sake of clarity, the description of the tightening device of the invention continues with reference to the attached drawings, which have a merely illustrative, not limiting value, wherein:
- Fig. 1 is an exploded axonometric view of a portion of wall and of the frame of the invention, which comprises a section and the tightening device of the invention according to a first embodiment;
- Figs. 2 to 4 are side views of the elements of Fig. 1, which are joined and sectioned along a plane passing through the longitudinal axis of the section and the axis of rotation of the tightening pin; each figure showing a different mutual position of the tightening device of the invention and the section;
- Figs. 2a to 4a are views of the elements of Figs. 2 to 4, sectioned along the plane A-A;
- Fig. 5 is an axonometric view of the tightening pin;
- Figs. 6 to 8 are respectively a top view, a side view and a bottom view of the tightening pin of Fig. 5;
- Fig. 9 is an exploded axonometric view of the frame of the invention according to a second embodiment, which comprises two sections and the tightening device according to a second embodiment, which is intended to fix said sections together;
- Figs. 10 to 12 are side views of the elements of Fig. 9, which are joined and sectioned along a plane passing through the longitudinal axes of the sections and the axes of rotation of the tightening pins; each figure showing a different mutual position of the tightening device of Fig. 9 and the two sections;
- Figs. 10a to 12a are views of the elements of Figs. 10 to 12, sectioned along the plane A-A.

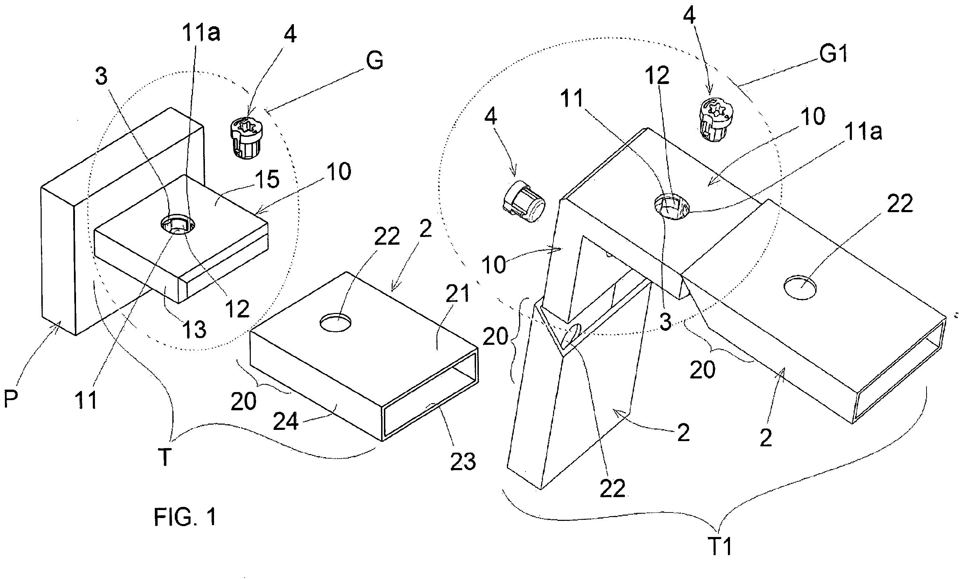

Fig. 1 shows the frame (T) of the invention according to a first embodiment, comprising:
- a section (2);
- the tightening device (G) of the invention according to a first embodiment, which connects said section (2) to a wall (P).

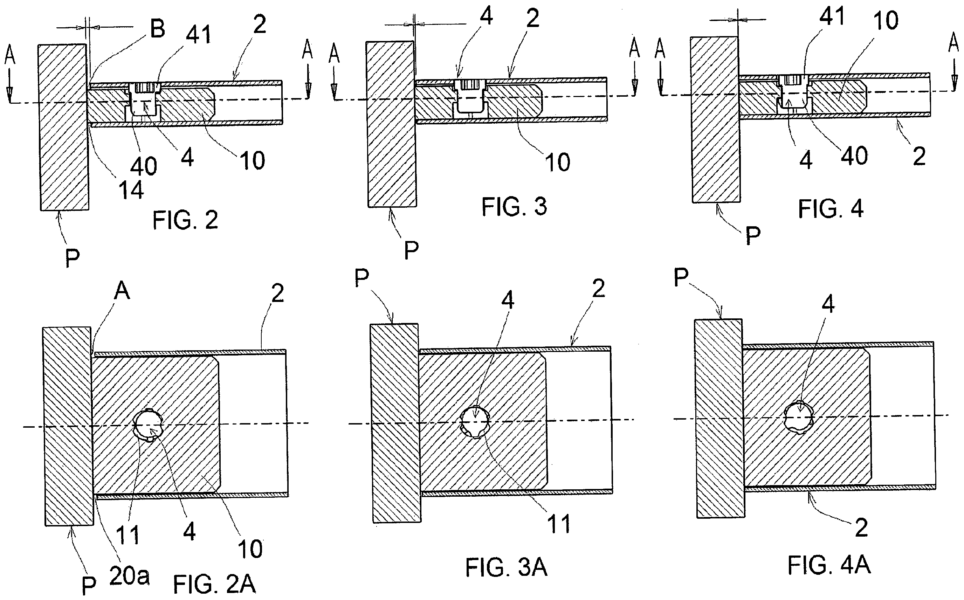

In particular, in said Fig. 1, said tightening device (G) is shown during a mounting step, for fixing the section (2) to the wall (P) against which said section (2) is disposed perpendicularly and stopped with the border (20a) of the free end (20), as shown in Figs. 2 to 4.

Said section (2) has a quadrangular section and comprises two lateral edges (24), an internal wall (23) and an external wall (21), wherein a hole (22) is obtained in proximity to said end (20).

It must be noted that, although in the attached figures the hole (22) is obtained on the external wall (21) of each section (2), said hole (22) can be alternatively obtained on the internal wall (23) of the section (2) or on one of said two lateral edges.

According to said first embodiment, the tightening device (G) comprises a plate (10) and a tightening pin (4).

The plate (10) is inserted in the end (20) of the section (2) and comprises two lateral edges (13) that are interfaced with the lateral edges (24) of the corresponding section, an internal wall (14) that is interfaced with the internal wall (23) of the corresponding section, and an external wall (15) that is interfaced with the external wall (21) of the corresponding section.

With reference to Fig. 1, the plate (10) comprises a seat (11) that is obtained on the external wall (15) of the plate (10) and is intended to be aligned with the hole (22) obtained on the external wall (21) of the section (2).

Said seat (11) comprises an opening (11a) and has, in plan view, a curvilinear profile composed of two identical opposite semi circumferences joined by two parallel rectilinear sections, as shown in Fig. 1.

The seat (11) is defined by a sidewall (12) from which two opposite projections (3) protrude, having a different thickness. Such projections (3) preferably consist in two ribs and are provided with a curvilinear cross-sectional profile.

With reference to Figs. 2, 3, and 4, the tightening pin (4) is inserted in the seat (11) of the plate (10) for tightening the section (2) to the wall (P).

With reference to Figs. 2 to 4 and 5 to 8, the tightening pin (4) comprises a cylindrical head (41) exactly inserted in the hole (22) of the section (2), and a cylindrical stem (40) that is provided with a free end (40a) in opposite position to the head (41) and is revolvingly inserted in the seat (11).

In particular, the stem (40) of the tightening pin (4) has a radius equal to the sum of the radii of the two semi circumferences that form the curvilinear profile of the opening (11a) of the seat (11).

The stem (40) of the tightening pin (4) comprises two opposite specular sets (S1, S2) of adjacent side-by-side niches (5) having a curvilinear cross-sectional profile with outward-facing concavity.

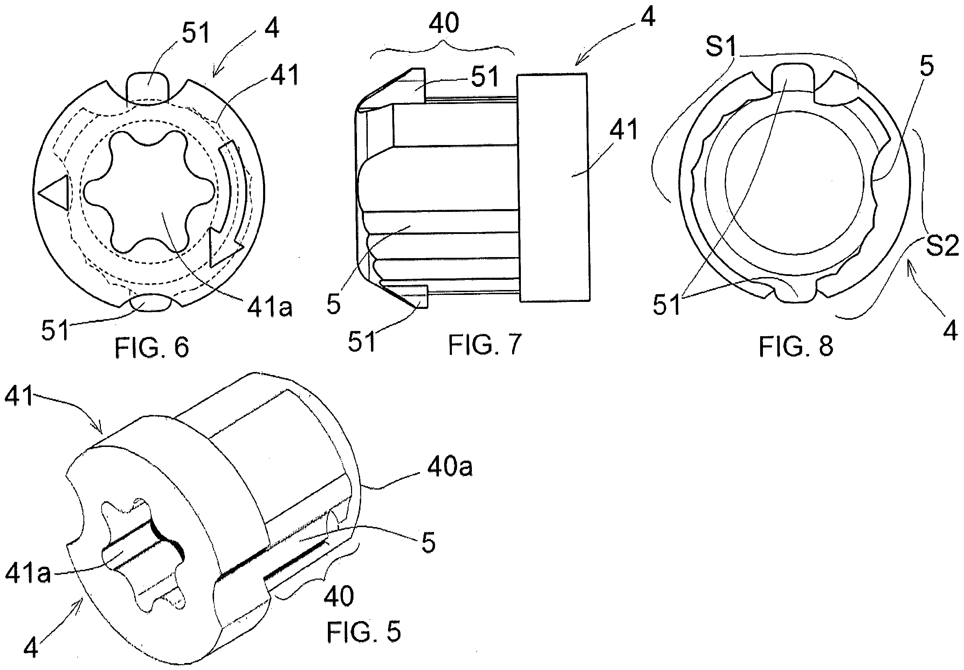

In particular, the niches (5) of each set (S1, S2) preferably consist in grooves and develop according to a perimeter trajectory, as shown in Figs. 5 to 8.

With reference to Fig. 8, the niches (5) of the same set (S1, S2) have a different depth and alternately house one of the projections (3) of the corresponding seat (11). More precisely, each projection (3) of the seat (11) is disposed inside one of the niches (5) of one of the sets (S1, S2), as shown in Figs. 2 to 4a.

In particular, the niches (5) of a first set (S1) have an increasing depth in the clockwise rotation direction of the stem (40), and the niches (5) of a second set (S2) have a decreasing depth in the clockwise rotation direction of the stem (40).

Each set of niches (5) comprises a first niche that is deeper than the other niches and the consecutive adjacent niches (5) of the same set (S1,S2) have a constant difference in depth, which is equal to approximately 1,5 mm.

Instead, it must be noted that, with respect to the adjacent niche (5), said first niche has a difference in depth that is higher than said constant difference in depth; said higher difference in depth being approximately 2 mm.

These parameters allow for an important displacement of the section (2) with respect to the plate (10) as soon as the tightening pin (4) is rotated and the projection (3) is moved from the first niche to the second niche (5).

Moreover, these parameters allow for a limited displacement of the section (2) with respect to the plate (10) when the tightening pin (4) is rotated further and the projection (3) is moved from the second niche (5) to the following niches (5) with lower depth, in such a way to obtain a fine tightening adjustment.

With reference to Figs. 2, 3, 4, 6, 7 and 8, two of the niches (5) of the stem (40) of the tightening pin (4) advantageously comprise an anti-loosening tooth (51) in order to prevent the tightening pin (4) from coming out of the corresponding seat (11) during the rotation of the tightening pin (4).

Each anti-loosening tooth (51) is obtained in correspondence of the free end (40a) of the stem (40) and is stopped under the projections (3) of the seat (11) that houses the tightening pin (4), as shown in Figs. 2 to 4.

With reference to Figs. 5 and 6, the tightening pin (4) has a star-shaped seat (41a) obtained in correspondence of the head (41) of the tightening pin (4) that can be operated with an Allen wrench in order to drive the tightening pin (4) in rotation.

Figs. 2 to 4 and Figs. 2a to 4a show the tightening steps of the section (2) to the wall (P) by rotating the tightening pin (4) of the tightening device (G) of the invention.

In particular, because of the rotation of the tightening pin (4) inside the seat (11), the niches (5) of each set (S1, S2) of the tightening pin (4) alternately house the projections (3) that protrude from the sidewall of the seat (11).

Moreover, because of the rotation of the tightening pin (4), the section (2) is translated with respect to the plate (10) in such a way to correct possible drilling errors of the section (2), thus optimizing the tightening between the section (2) and the wall.

With reference to Figs. 2, 2a, 3, 3a, 4 and 4a, it can be noted that, because of the rotation of the tightening pin (4), the space (B) between the section (2) and the wall (P) is reduced until it disappears when the section (2) is tightened against the wall (P), as shown in Fig. 4 and 4a.

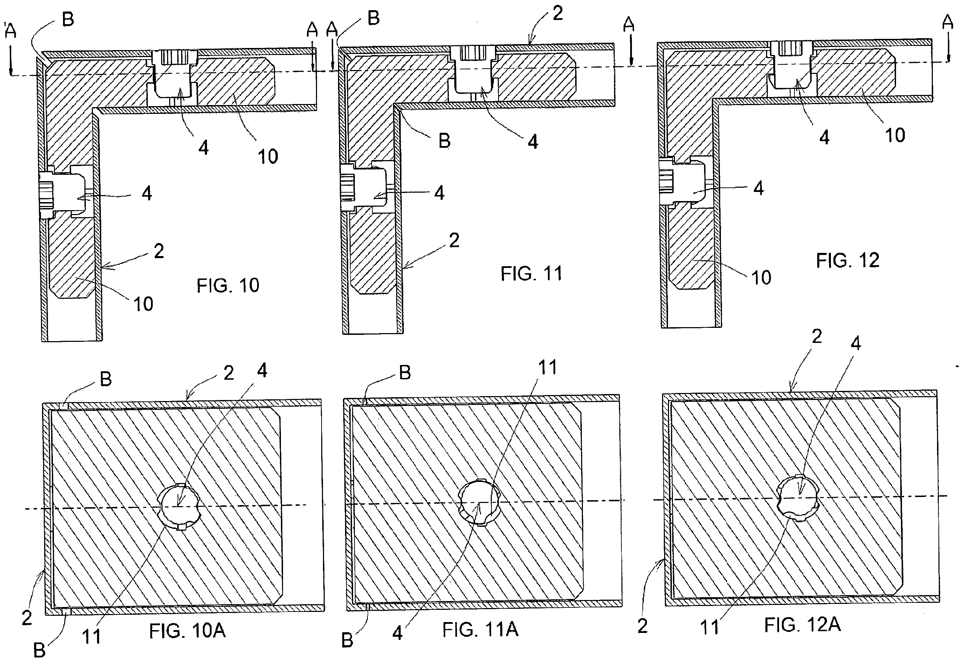

Fig. 9 shows the frame (T) of the invention according to a second embodiment, comprising:
- two sections (2);
- the tightening device (G1) of the invention according to a second embodiment, which connects said two sections (2).

As shown in Figs. 9 to 12, according to said second embodiment, the tightening device (G1) comprises two plates (10) inserted in the ends (20) of said two sections (2); according to this particular embodiment of the frame (T1), the two sections (2) are intended to be mounted perpendicularly, and therefore the two plates (10) of the tightening device (G1) of the invention are perpendicular.

With reference to Figs. 9 to 12, the tightening device (G1) comprises two identical tightening pins (4) inserted in the seats (11) of the two plates (10) for tightening the sections (2).

Figs. 10 to 12 show the tightening steps of the sections (2) by means of the rotation of the two tightening pins (4) of the tightening device (G) of the invention.

In particular, because of the rotation of each tightening pin (4) inside the seat (11), the niches (5) of each set (S1, S2) of the tightening pin (4) alternately house the projections (3) that protrude from the sidewall of the seat (11). Moreover, because of the rotation of each tightening pin (4), the section (2) is translated with respect to the plate (10) of the tightening device (G1), in such a way to correct possible drilling errors of the sections (2), thus optimizing the tightening between the sections (2) of the frame.

The provision of said two tightening pins (4), each of them being joined to one of the two sections (2) to be tightened, makes it possible to adjust the position of each section (2) regardless of the other one, guaranteeing a correct mutual positioning of the two sections (2).

It must be noted that in the square of the prior art, in which the two plates were moved closer or farther by means of the register screw, it was impossible to adjust the position of an individual section with respect to the plate inserted in it.

With reference to Figs. 10, 10a, 11, 11a, 12 and 12a, it can be noted that, because of the rotation of the two tightening pins (4), the space (B) between the ends (20) of the two sections (2) is reduced until it disappears when the two sections (2) are tightened together, as shown in Fig. 12 and 12a.

## Claims

1. Tightening device (G, G1) comprising:
- a plate (10) with a seat (11) defined by at least one sidewall (12); said plate (10) comprising two opposite projections (3) that protrude from said at least one sidewall (12) of said seat (11);
- a tightening pin (4) comprising a stem (40) revolvingly inserted in said seat (11); said tightening pin (4) comprising two opposite specular sets (S1, S2) of adjacent side-by-side niches (5), wherein each projection (3) of the seat (11) of said plate (10) is disposed inside one of the niches (5) of one of said two sets (S1, S2);
**characterized in that**
the niches (5) of a same set (S1, S2) have a different depth.

2. The tightening device (G, G1) of claim 1, wherein the niches (5) of a first set (S1) have an increasing depth in the clockwise rotation direction of the stem (40) of said tightening pin (4), and the niches (5) of a second set (S2) have a decreasing depth in the clockwise rotation direction of the stem (40) of said tightening pin (4).

3. The tightening device (G, G1) of claim 1 or 2, wherein said niches (5) of the stem (40) of said tightening pin (4) and said projections (3) of the seat (11) of said plate (10) have a curvilinear cross-sectional profile.

4. The tightening device (G, G1) of any one of the preceding claims, wherein the stem (40) of said tightening pin (4) comprises a free end (40a) and at least one of said niches (5) of said stem (40) comprises an anti-loosening tooth (51) obtained in correspondence of said free end (40a) of the stem (40) of said tightening pin (4) and stopped under the projections (3) of the seat (11) of said plate (10).

5. The tightening device (G, G1) of any one of the preceding claims, wherein said seat (11) of said plate (10) comprises an opening (11a); said seat (11) being provided, in plan view, with a curvilinear profile composed of two identical opposite semi circumferences joined by two parallel rectilinear sections.

6. The tightening device (G, G1) of any one of the preceding claims, wherein each set of niches (5) comprises a first niche that is deeper than the other niches; wherein consecutive adjacent niches (5) of the same set (S1,S2) have a constant difference in depth and wherein, with respect to the adjacent niche (5), said first niche has a difference in depth higher than said constant difference in depth.

7. The tightening device (G1) of any one of the preceding claims, comprising two plates (10) that are joined together and two tightening pins (4); wherein the stem (40) of each tightening pin (4) is revolvingly inserted in the seat (11) of one of said two plates (10).

8. The tightening device (G1) of claim 7, wherein said two plates (10) are joined at right angle.

9. Frame (T,T1) comprising:
- a section (2) comprising an end (20) and at least one wall (21, 22) wherein a hole (22) is obtained in proximity to said end (20);
- a tightening device (G,G1) according to any one of claims 1 to 6, wherein the plate (10) is inserted in said end (20) of said section (2) and wherein said seat (11) of said plate (10) is aligned with respect to the hole (22) obtained on said at least one wall (21, 22) of said section (2); said tightening pin (4) comprising a cylindrical head (41) exactly inserted in the hole (22) of said section (2).

10. Frame (T1) comprising:
- two adjacent consecutive sections (2); each section (2) comprising an end (20) and at least one wall (21, 22) wherein a hole (22) is obtained in proximity to said end (20);
- a tightening device (G1) according to claim 7 or 8, wherein each plate (10) is inserted in said end (20) of one of said sections (2) and wherein said seat (11) of each plate (10) is aligned with respect to the hole (22) obtained on said at least one wall (21, 22) of one of said two sections (2); each tightening pin (4) comprising a cylindrical head (41) exactly inserted in the hole (22) of one of said two sections (2).

## Patentansprüche

1. Spannvorrichtung (G, G1), umfassend:
- eine (10), umfassend einen Sitz (11), der von wenigstens einer Seitenwand (12) begrenzt ist; wobei die Platte (10) zwei gegenüberliegende Auskragung (3) umfasst, die aus der wenigstens einen Seitenwand (12) des Sitzes (11) auskragen;
- einen Spannstift (4), umfassend einen drehbar in den Sitz (11) eingesetzten Schaft (40); wobei der Spannstift (4) zwei spiegelbildlich gegenüberliegende Reihen (S1, S2) von aneinander angrenzende, nebeneinander liegende Nischen (5) umfasst, in denen jede Auskragung (3) des Sitzes (11) der Platte (10) im Inneren einer der Nischen (5) einer der beiden Reihen (S1, S2) angeordnet ist;
**dadurch gekennzeichnet, dass**
die Nischen (5) einer gleichen Reihe (S1, S2) unterschiedliche Tiefen aufweisen.

2. Spannvorrichtung (G, G1) nach Anspruch 1, wobei die Nischen (5) einer ersten Reihe (S1) eine Tiefe aufweisen, die in uhrzeigersinniger Drehrichtung des Schafts (40) des Spannstifts (4) zunimmt, und die Nischen (5) einer zweiten Reihe (S2) eine Tiefe aufweisen, die in uhrzeigersinniger Drehrichtung des Schafts (40) des Spannstifts abnimmt.

3. Spannvorrichtung (G, G1) nach Anspruch1 oder 2, wobei die Nischen (5) des Schafts (40) des Spannstifts (4) un die Auskragungen (3) des Sitzes (11) der Platte (10) im Querschnitt ein gebogenes Profil aufweisen.

4. Spannvorrichtung (G, G1) nach einem der vorstehenden Ansprüche, wobei der Schaft (40) des Spannstifts (4) ein freies Ende (40a) aufweist und wenigstens eine der Nischen (5) des Schafts (40) einen Antilösen-Zahn (51) umfasst, der am freien Ende (40a) des Schafts (40) des Spannstifts (4) herausgearbeitet ist und unterhalb der Auskragungen (3) des Sitzes (11) der Platte (10) in Anschlag geht.

5. Spannvorrichtung (G, G1) nach einem der vorstehenden Ansprüche, wobei der Sitz (11) der Platte (10) eine Einmündung (11a) umfasst; wobei der Sitz (11) im Grundriss ein gebogenes Profil aufweist, das aus zwei gegenüberliegenden, identischen Umfangshälften besteht, die durch zwei parallele geradlinige Abschnitte verbunden sind.

6. Spannvorrichtung (G, G1) nach einem der vorstehenden Ansprüche, wobei jede Reihe von Nischen (5) eine erste Nische umfasst, die tiefer als die anderen Nischen ist; wobei die hintereinander liegenden, angrenzenden Nischen (5) derselben Reihe (S1,S2) eine konstante Tiefendifferenz aufweisen und wobei die erste Nische in Bezug auf die angrenzende Nische (5) eine Tiefendifferenz aufweist, die größer als die konstante Tiefendifferenz ist.

7. Spannvorrichtung (G1) nach einem der vorstehenden Ansprüche, umfassend zwei miteinander verbundene Platten (10) und zwei Spannstifte (4); wobei der Schaft (40) eines jeden Spannstifts (4) drehbar in den Sitz (11) einer der beiden Platten (10) eingesetzt ist.

8. Spannvorrichtung (G1) nach Anspruch 7, wobei die beiden Platten (10) im rechten Winkel zueinander angeordnet sind.

9. Rahmen (T, T1) umfassend:
- ein Profil (2), umfassend einen Endabschnitt (20) und wenigstens eine Wand (21, 22), in der eine Loch (22) nahe des Endabschnitts (20) herausgearbeitet ist;
- eine Spannvorrichtung (G,G1) nach einem der Ansprüche 1 bis 6, wobei die Platte (10) in das Innere des Endabschnitts (20) des Profils (2) eingesetzt ist und wobei der Sitz (11) der Platte (10) in Bezug auf das Loch (22) gefluchtet ist, das auf der wenigstens einen Wand (21, 22) des Profils (2) herausgearbeitet ist; wobei der Spannstift (4) einen zylindrischen Kopf (41) umfasst, der genau in das Loch (22) des Profils (2) eingefügt ist.

10. Rahmen (T1), umfassend:
- zwei hintereinander liegende, angrenzende Profile (2); wobei jedes Profil (2) einen Endabschnitt (20) und wenigstens eine Wand (21, 22) umfasst, in der ein Loch (22) nahe des Endabschnitts (20) herausgearbeitet ist;
- eine Spannvorrichtung (G1) nach Anspruch 7 oder 8, wobei jede Platte (10) in das Innere des Endabschnitts (20) eines der Profile (2) eingesetzt ist und wobei der Sitz (11) einer jeden Platte (10) in Bezug auf das Loch (22) gefluchtet ist, das auf der wenigstens einen Wand (21, 22) eines der beiden Profile (2) herausgearbeitet ist; wobei jeder Spannstift (4) einen zylindrischen Kopf (41) umfasst, der genau in das Loch (22) eines der beiden Profile (2) eingefügt ist.

## Revendications

1. Dispositif de serrage (G, G1) comprenant :
- une plaque (10) comprenant un emplacement (11) délimité par au moins une cloison latérale (12) ; ladite plaque (10) comprenant deux saillies (3) opposées qui débordent d'au moins une cloison latérale (12) du dit emplacement (11) ;
- une goupille de serrage (4) comprenant une tige (40) enfilée, avec possibilité de rotation, dans ledit emplacement (11) ; ladite goupille de serrage (4) comprenant deux séries (S1, S2) opposées et spéculaires de niches (5) adjacentes et juxtaposées, où chaque saillie (3) de l'emplacement (11) de ladite plaque (10) est disposée à l'intérieur d'une des niches (5) d'une des dites deux séries (S1, S2) ;
**caractérisé en ce que**
les niches (5) d'une même série (S1, S2) ont des profondeurs différentes entre elles.

2. Dispositif de serrage (G, G1) selon la revendication 1, où les niches (5) d'une première série (S1) présentent une profondeur croissante dans la direction de rotation horaire de la tige (40) de ladite goupille de serrage (4), et les niches (5) d'une seconde série (S2) présentent une profondeur décroissante dans la direction de rotation horaire de la tige (40) de ladite goupille de serrage (4).

3. Dispositif de serrage (G, G1) selon la revendication 1 ou 2, où lesdites niches (5) de la tige (40) de ladite goupille de serrage (4) et lesdites saillies (3) de l'emplacement (11) de ladite plaque (10) présentent, en section transversale, un profil curviligne.

4. Dispositif de serrage (G, G1) selon l'une quelconque des revendications précédentes, où la tige (40) de ladite goupille de serrage (4) comprend une extrémité libre (40a) et au moins une des dites niches (5) de ladite tige (40) comprend une dent anti-desserage (51) qui est réalisée en correspondance de ladite extrémité libre (40a) de la tige (40) de ladite goupille de serrage (4) et qui est en butée en-dessous des saillies (3) de l'emplacement (11) de ladite plaque (10).

5. Dispositif de serrage (G, G1) selon l'une quelconque des revendications précédentes, où ledit emplacement (11) de ladite plaque (10) comprend une embouchure (11a) ; ledit emplacement (11) présentant, en plan, un profil curviligne composé de deux demi-circonférences identiques opposées reliées par deux segments rectilignes parallèles.

6. Dispositif de serrage (G, G1) selon l'une quelconque des revendications précédentes, où chaque série de niches (5) comprend une première niche plus profonde des autres niches ; où les niches (5) consécutives et adjacentes de la même série (S1,S2) présentent une différence de profondeur constante et où la première niche présente, par rapport à la niche (5) qui lui est adjacente, une différence de profondeur majeure de ladite différence de profondeur constante.

7. Dispositif de serrage (G, G1) selon l'une quelconque des revendications précédentes, comprenant deux plaques (10), reliées entre elles, et deux goupilles de serrage (4) ; où la tige (40) de chaque goupille de serrage (4) est enfilée, avec possibilité de rotation, dans l'emplacement (11) d'une des dites deux plaques (10).

8. Dispositif de serrage (G1) selon la revendication 7, où lesdites deux plaques (10) sont reliées en équerre entre elles.

9. Châssis (T,T1) comprenant :
- un profilé (2) comprenant un segment d'extrémité (20) et au moins une cloison (21, 22) dans laquelle un orifice (22) est réalisé, à proximité du dit segment d'extrémité (20) ;
- un dispositif de serrage (G,G1), selon l'une des revendications de 1 à 6, où la plaque (10) est introduite à l'intérieur du dit segment d'extrémité (20) du dit profilé (2) et où ledit emplacement (11) de ladite plaque (10) est aligné par rapport à l'orifice (22) réalisé sur dite au moins une cloison (21, 22) du dit profilé (2) ; ladite goupille de serrage (4) comprenant une tête (41) cylindrique, exactement enfilée dans l'orifice (22) du dit profilé (2).

10. Châssis (T1) comprenant :
- deux profilés (2) adjacents et consécutifs ; chaque profilé (2) comprenant un segment d'extrémité (20) et au moins une cloison (21, 22) dans laquelle un orifice (22) est réalisé, à proximité du dit segment d'extrémité (20) ;
- un dispositif de serrage (G1), selon la revendication 7 ou 8, où chaque plaque (10) est introduite à l'intérieur du dit segment d'extrémité (20) d'un des dits profilés (2) et où ledit emplacement (11) de chaque plaque (10) est aligné par rapport à l'orifice (22) réalisé sur ladite au moins une cloison (21, 22) d'un des dits deux profilés (2) ; chaque goupille de serrage (4) comprenant une tête (41) cylindrique, exactement enfilée dans l'orifice (22) d'un des dits deux profilés (2).
